# EUROPÄISCHE PATENTSCHRIFT

(11) **EP 0 542 002 B1**
(45) Veröffentlichungstag und Bekanntmachung des Hinweises auf die Patenterteilung: **03.01.1996**
(21) Anmeldenummer: 92117984.2
(22) Anmeldetag: 21.10.1992
(51) Int. Cl.: F01N 3/28, B01J 35/06, B01J 35/04

(54) **Katalysator für die Abgase eines Verbrennungsmotors**
Catalytic converter for the exhaust gases of an internal combustion engine
Catalyseur pour gaz d'échappement d'un moteur à combustion interne

(30) Priorität: 12.11.1991 DE 4137105
(43) Veröffentlichungstag der Anmeldung: 19.05.1993
(60) Teilanmeldung: 95104354.6
(73) Patentinhaber: Schwäbische Hüttenwerke GmbH, D-73414 Aalen (DE)
(72) Erfinder: Härle, Hans A., W-7085 Bopfingen (DE)
(74) Vertreter: Lorenz, Werner, Dipl.-Ing.

(56) Entgegenhaltungen:
- EP-A- 0 387 394
- EP-A- 0 415 835
- DE-A- 3 509 969
- DE-A- 3 739 081
- DE-A- 3 925 596
- DE-A- 3 928 790
- FR-A- 2 145 340
- GB-A- 2 065 494

## Beschreibung

Die Erfindung betrifft einen Katalysator, für die Abgase eines Verbrennungsmotors, im Auslaßbereich des Zylinders des Verbrennungsmotors vor dem Abgaskrümmer und/oder im Eingangsbereich des Abgaskrümmers, wobei der Katalysator aus einem Gewebe, Gestrick oder Gewirr aus Metallfasern, Metallspänen, Metalldrähten, Metallpulver oder einer Mischung daraus gebildet ist, die in einer oder mehreren Lagen zu einem Paket zusammengepreßt sind.

Aus der DE-OS 37 43 503 ist es bereits bekannt, einen Katalysatorkörper aus einem Gewebe, Gestrick, Gewirr aus Metallfasern, Metallspänen, Metalldrähten oder Metallpulver oder einer Mischung daraus vorzusehen, der in der Abgasleitung bzw. im Auspuffsystem eines Verbrennungsmotores angeordnet ist. Der aus mehreren Lagen bestehende Katalysatorkörper ist dabei durch einen Sintervorgang gebildet.

Aus der DE-OS 39 25 596 ist es bekannt, mehrere Lagen aus Metallfasern oder Metalldrähten durch eine Widerstandsverschweißung zu einem einheitlichen Filterkörper zu verbinden.

Aus der DE-A-37 39 081 ist eine Einrichtung zur Schalldämpfung bei Verbrennungsaggregaten bekannt, bei der schalldämpfende und gasdurchlässige Bauteile so nah wie möglich am Verbrennungsort des Verbrennungsgemisches bei Motoren angeordnet werden. Derartige Bauteile sind mit unterschiedlich langen, im Durchmesser jeweils verschieden großen und sich kreuzenden Durchlässen für das Verbrennungsgas versehen und werden vorteilhafterweise im oder am Zylinderkopf oder im Abgaskrümmer angeordnet. Gleichzeitig können derartige Bauteile neben der Schalldämpfung auch zur Abgasreinigung als Katalysator ausgebildet sein.

Aus der DE-A-39 25 596 ist ein Verfahren zur Herstellung eines Filters und ein danach hergestellter Filter bekannt. Bei diesem Verfahren zur Herstellung eines Filters für flüssige oder gasförmige Medien, insbesondere für Abgase von Verbrennungsmotoren, wird der Filter aus einer oder mehreren Platten aus einem Geflecht oder Gewirk von Metalldrähten gebildet. Die Platte, die aus mehreren Lagen von Drähten besteht, wird zwischen die Elektroden einer Widerstandsschweißeinrichtung gebracht zusammengedrückt und anschließend erfolgt eine Widerstandsschweißung zur teilweisen Verbindung der Drähte untereinander.

Nachteilig an dem bekannten Filter ist jedoch, daß die Abgase beim Durchströmen des Katalysatorkörpers nur verhältnismäßig schwach verwirbelt werden, sodaß das Abgas nur für einen relativ kurzen Zeitraum und/oder nur zum Teil mit der katalytisch beschichteten Oberfläche des Katalysators in Verbindung kommt, wodurch ein verhältnismäßig schlechter Konvertierungsgrad erreicht wird.

Der vorliegenden Erfindung liegt daher die Aufgabe zugrunde, die vorstehend genannten Nachteile zu beseitigen, insbesondere eine Abgasreinigung mit einem Katalysator zu schaffen, der einen besseren Wirkungsgrad besitzt.

Erfindungsgemäß wird diese Aufgabe dadurch gelöst, daß jede Lage einen Gitterstrukturaufbau aufweist.

Durch den gitterartigen Aufbau jeder Lage werden in den Zwischenräumen bzw. Maschen des Katalysators durchgängige Kanäle gebildet, durch die das Abgas hindurchströmt. Durch die Maschen bzw. die Maschengitter erfolgt eine starke Verwirbelung des Abgases, so daß es zu einer erheblich besseren Kontaktierung mit der katalytisch beschichteten Oberfläche kommt, wodurch der Konvertierungsgrad verbessert wird.

Die Verwirbelung und damit Kontaktierung wird noch besser, wenn man die Maschen von hintereinander angeordneten Lagen versetzt zueinander ordnet. Dabei genügt gegebenenfalls bereits eine geringfügige Versetzung, und zwar dergestalt, daß das Abgas abwechselnd auf einen Gitterdraht auftrifft oder diesen streift, wodurch es zu einer Ablenkung und damit zu einer zusätzlichen Verwirbelung kommt.

Bei einer Anordnung des Katalysatorkörpers in dem Zylinder eines Verbrennungsmotors in dessen Auslaßbereich oder im Eingangsbereich des Abgaskrümmers kann man vorzugsweise mehrere Lagen aus einem Gewebe, Gestrick oder Gewirr hintereinander anordnen. Zur einfachen Handhabung und zur besseren Wirkung wird man diese Lagen zu einer Einheit fest miteinander verbinden.

Eine mögliche Ausgestaltung hierfür kann darin bestehen, daß die Lagen durch eine Klammereinrichtung zusammengepreßt sind und als Einheit in den Auslaßbereich des Zylinders und/oder den Eingangsbereich des Abgaskrümmers eingeschoben werden.

Als Klammereinrichtung sind die verschiedensten Einrichtungen denkbar. So kann z.B. ein Paket von mehreren Lagen nach Art einer Zarge durch eine Ober- und eine Unterplatte miteinander unter Druck verbunden werden.

Eine weitere Möglichkeit der Bildung eines einheitlichen Katalysatorkörpers kann darin bestehen, daß die einzelnen Lagen durch eine Widerstandsschweißung miteinander verbunden werden und als Einheit in den Auslaßbereich des Zylinders und/oder den Eingangsbereich des Abgaskrümmers eingeschoben werden.

Eine sehr vorteilhafte Ausgestaltung kann darin bestehen, daß die einzelnen Lagen paketiert einem Sintervorgang unterworfen werden und anschließend als Einheit in den Auslaßbereich des Zylinders und/oder den Eingangsbereich des Abgaskrümmers eingeschoben werden.

Eine weitere Verbesserung des Konvertierungsgrades durch eine Oberflächenvergrößerung und/oder eine zusätzliche Einbringung von katalytisch wirkendem Material kann dadurch erreicht werden, daß die Lagen mit Spänen, kleinen Drahtstücken, Fasern, Pulver oder dergleichen dotiert sind, die mit den Fasern, Spänen oder Drähten des Gewebes, Gestrickes oder Gewirres verbunden sind.

Besonders vorteilhaft läßt sich hierfür spratziges Pulver verwenden, das eine deutliche Oberflächenvergrößerung ergibt.

Alternativ hierzu oder kombiniert mit einer Dotierung des Gewebes, Gestrickes oder Gewirres mit Zusatzmaterialien kann der Katalysatorkörper auch abschließend in ein Tauchbad eingebracht werden. Das Tauchbad besteht aus einem Brei bzw. einer Suspension aus Teilchen aus Metall, Keramik, Kunststoff oder ähnlichem. Nach dem Abtropfen wird die zusätzliche Schicht gehärtet oder einem Sinterprozeß unterworfen. Ein ähnliches Verfahren ist auch als "Wash-Coat-Verfahren" bekannt.

Zur Lagefixierung des als Einheit in einen Abgaskrümmer einschiebbaren Katalysatorkörpers kann der Abgaskrümmer auch mit einem oder mehreren Anschlägen versehen sein.

Nachfolgend sind anhand der Zeichnung Ausführungsbeispiele der Erfindung prinzipmäßig dargestellt.

Es zeigt:
- Fig. 1: einen Schnitt durch den oberen Teil eines Verbrennungsmotores mit zwei erfindungsgemäßen Anordnungen eines Katalysatorkörpers;
- Fig. 2: ausschnittsweise eine vergrößerte Darstellung des erfindungsgemäßen Katalysatorkörpers;
- Fig. 3: eine perspektivische Darstellung einer aus mehreren Lagen gebildeten Einheit eines Katalysatorkörpers;
- Fig. 4: einen Schnitt durch einen Katalysatorkörper, der durch eine Klammereinrichtung zusammengehalten ist;
- Fig. 5: einen Schnitt durch einen Katalysatorkörper, der durch eine Widerstandsverschweißung gebildet ist.

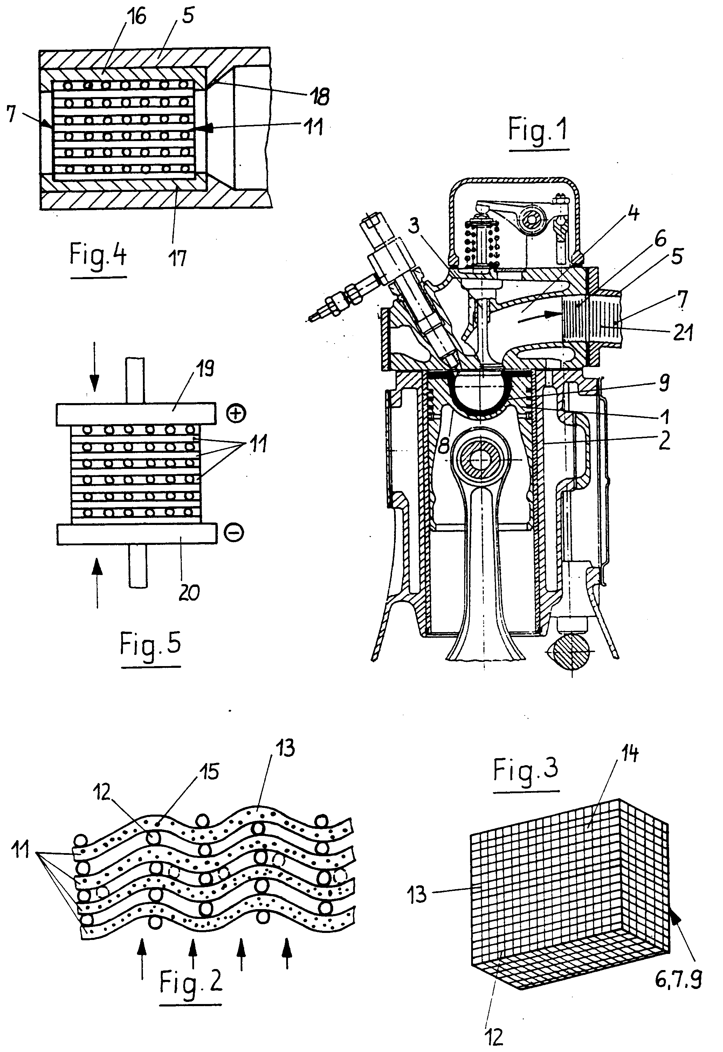

In der Fig. 1 ist prinzipmäßig der obere Bereich eines Verbrennungsmotores mit einem Kolben 1, der in bekannter Weise in einem Zylinder 2 Hub- und Senkbewegungen ausführt, dargestellt. Der Aufbau eines Verbrennungsmotores ist allgemein bekannt, weshalb hier nicht näher darauf eingegangen wird. Ein Auslaßventil 3 schließt einen Auslaßbereich 4 im Zylinder 2 ab bzw. gibt diesen entsprechend gesteuert zum Ausstoßen von Abgas frei. An den Auslaßbereich 4 schließt sich ein Abgaskrümmer 5 an.

Wie ersichtlich ist ein Katalysatorkörper 6 im Auslaßbereich 4 und ein weiterer Katalysatorkörper 7 im Eingangsbereich des Auslaßkrümmers 5 angeordnet.

Auf dem gekrümmten Kolbenboden 8 des Kolbens 1 kann ein weiterer, entsprechend gekrümmter Katalysatorkörper 9 angebracht sein.

Zur Vereinfachung sind in der Fig. 1 zwei Möglichkeiten der Anordnung eines Katalysatorkörpers aufgezeigt.

Neben dieser Darstellungsform sind selbstverständlich auch noch andere Kombinationsmöglichkeiten gegeben. So können z.B. die Katalysatorkörper 6 und 7 auch gemeinsam oder alleine vorgesehen sein.

Der Aufbau des Katalysatorkörpers ist aus den Fig. 2 und 3 deutlicher ersichtlich. Wie dargestellt ist er aus mehreren Lagen 11 aus einem Gewirr von sich kreuzenden Drähten oder Fasern 12 und 13 gebildet. Jede Lage 11 besteht dabei aus einer Vielzahl von Längsdrähten oder Fasern 12, die mit quer dazu verlaufenden Drähten oder Fasern 13 verbunden sind. Zur Erhöhung der Oberfläche und der Stabilität können die Drähte 11, 13 auch wellenförmig verlaufen.

Aus der Fig. 3 ist ersichtlich, daß durch diese Ausgestaltung eine gitterartige bzw. wabenartige Struktur mit einer Vielzahl von Maschen 14 gebildet wird, durch die das Abgas strömt.

Bei der Strömung des Abgases gemäß Pfeilrichtung der Fig. 2 erfolgt eine entsprechende Verwirbelung durch die Drähte bzw. Fasern 12 und 13. Diese Verwirbelung und damit bessere Kontaktierung mit den katalytisch beschichteten Drähten oder Fasern 12, 13 wird noch erhöht, wenn hintereinanderliegende Drähte 12 versetzt zueinander angeordnet sind (siehe gestrichelte Darstellung).

Zur Oberflächenvergrößerung und zur Erhöhung der katalytischen Wirksamkeit können die einzelnen Lagen auch noch mit Partikeln in Form von kleinen Spänen, kleinen Fasern oder groben Pulvern 15 dotiert werden (teilweise in der Fig. 2 dargestellt).

Diese Dotierung kann z.B. durch ein Einrütteln, durch ein Mittel in flüssiger Form als Trägersubstanz, in der die Partikeln aufgenommen sind, oder dergleichen erfolgen, wonach die Verbindung durch einen Sintervorgang oder durch eine Widerstandsverschweißung mit den Drähten, Fasern 12, 13 erfolgt.

Der erfindungsgemäße Katalysatorkörper kann in bekannter Weise durch einen Sintervorgang der übereinander gelegten Drähte und Lagen hergestellt werden, die entsprechend gepreßt und in bekannter Weise in einem Sintervorgang miteinander verbunden werden.

In Fig. 4 ist eine Ausführungsform dargestellt, in der die einzelnen Lagen übereinander gelegt werden und durch eine Klammereinrichtung mit einer Oberplatte 16 und einer Unterplatte 17 mechanisch zusammengepreßt und so gehalten werden.

Aus der Fig. 4 ist auch ersichtlich, wie der Katalysatorkörper 7 als Einheit in den Abgaskrümmer 5 eingeschoben wird und in diesem durch ein oder mehrere Anschläge 18 auf der hinteren Seite in seiner Lage fixiert ist. Auf der vorderen Seite erfolgt die Fixierung durch den Anschluß des Abgaskrümmers 5 an den Zylindern.

Statt einer einfachen mechanischen Zusammenpressung der einzelnen Lagen 11 des Katalysatorkörpers können die einzelnen Lagen auch durch eine Widerstandsverschweißung zwischen zwei Elektroden 19 und 20 zu einer massiven Einheit miteinander verbunden werden. Das Widerstandsverschweißungsverfahren ist allgemein bekannt, weshalb hier nachfolgend ebenfalls nicht näher darauf eingegangen wird.

Als Material zur Bildung des Katalysatorkörpers aus den Metallfasern, Metallspänen, Metalldrähten, Metallpulver oder einer Mischung daraus sind z.B. folgende Materialien geeignet:

1. Werkstoffe einer intermetallischen (intensive Mischung) Phase, wie Ni₃Al, NiAl, Ti₃Al, TiAl, Mg₂Si, Al₃Mg, MnZr₂, Ti₅Si₃.

2. Stähle mit einem 17-26% Cr, Ni 3-37%, Si 0,7-2,5%; C < 0,1 %; Mn 1-2 %, P ≤ 0,03 %; S ≤ 0,02 %, Al 0,7-6 % Gehalt.

### 3. Stähle:

a) 18,5 % Cr; 9,5 % Ni, N 0,15 %, Si 1,3 %, C < 0,06 %, und geringe Mengen von seltenen Erdmetallen, vorwiegend Cerium.
b) 21 % Cr, 11 % Ni, 1,7 % Si, C < 0,1 %, N 0,17 % und seltene Erdmetalle, vorwiegend Cerium.
c) 25 % Cr; 35 % Ni, 1,5 % Si, C < 0,05 % und seltene Erdmetalle, vorwiegend Cerium.

Als Dotierungspartikeln für die einzelnen Lagen 11 können folgende Materialien verwendet werden:

1. Materialien analog dem Grundmaterial.

2. Leichtmetalloxyde wie AlₓO_{y}, SiₓO_{y}: z.B Al₂O₃, SiO₂, oder SiTiO₃, AlTiO₅, SiO₂, ZrO₂, SiC, TiO₂, BaTiO₃, Si₃N₄, Cr₂O₃.

Die vorgenannten Materialen können einzeln oder in Mischungen verwendet werden. Zusätzlich können noch Kohlenstoffasern und/oder Kohlenstoffpartikeln beigemischt oder auch alleine verwendet werden.

Die Verwendung von Aluminium hat den Vorteil, daß sich dieses an der Oberfläche abscheidet und dort eine sehr korrosionsfeste Schicht bildet. Weiterhin hat sich herausgestellt, daß es ein gutes "Verankerungsmittel" für eine zusätzliche Schicht bilden kann, wie z.B. bei einer zusätzlichen Aufbringung von Teilchen in einem Tauchbad.

Weiterhin können die Dotierungspartikel auch als Einlagen von katalytischen Materialien, wie z.B. die Leichtmetalloxyde, dienen.

Eine Zugabe von Kohlenstoffasern und/oder Kohlenstoffpartikeln entweder allein oder in Mischung mit anderen Partikeln zur Dotierung des Katalysators bringt eine weitere Erhöhung der Hitzebeständigkeit, die ja gerade in dem gewählten Bereich entscheidend ist. Die Kohlenstoffasern und/oder Kohlenstoffpartikeln können dabei das einzige Dotierungsmaterial darstellen oder mit den vorstehend genannten Materialien als Mischung aufgebracht werden.

In einer sehr vorteilhaften Weise lassen sich keramische Fasern, z.B. Aluminiumoxydfasern, in den Katalysatorkörper einfügen. Derartige Fasern vermindern die Wärmeabfuhr und bringen damit eine noch schnellere Temperaturerhöhung des Katalysators im Kaltstartbetrieb des Motores auf die erforderliche Reaktionstemperatur. Darüberhinaus haben diese Fasern den Vorteil, daß sie auch die mechanische Beanspruchung verbessern.

Zur Erhöhung der Wirksamkeit des Katalysatorkörpers 6 oder 7 können ein oder mehrere Heizstäbe 21 oder Heizgitter in den Katalysatorkörper eingeschoben werden (siehe Prinzipdarstellung in der Fig. 1).

## Patentansprüche

1. Katalysator, für die Abgase eines Verbrennungsmotors, angeordnet im Auslaßbereich des Zylinders (2) des Verbrennungsmotors vor dem Abgaskrümmer und/oder im Eingangsbereich des Abgaskrümmers (5), wobei der Katalysator aus einem Gewebe, Gestrick oder Gewirr aus Metallfasern, Metallspänen, Metalldrähten, Metallpulver oder einer Mischung daraus gebildet ist, die in einer oder mehreren Lagen (11) zu einem Paket zusammengepreßt sind,
**dadurch gekennzeichnet** , daß jede Lage (11) einen Gitterstrukturaufbau aufweist.

2. Anordnung nach Anspruch 1,
**dadurch gekennzeichnet** , daß die Gittermaschen (14) von hintereinander angeordneten Lagen (11) versetzt zueinander angeordnet sind.

3. Anordnung nach Anspruch 1 oder 2,
**dadurch gekennzeichnet**, daß die Maschenweite 0,5 bis 5 mm, vorzugsweise 1 bis 2 mm beträgt.

4. Anordnung nach einem der Ansprüche 1 bis 3,
**dadurch gekennzeichnet**, daß die Drähte oder Fasern (12,13) einer Lage (11) wenigstens annähernd eine Wellenform aufweisen.

5. Anordnung nach einem der Ansprüche 1 bis 4,
**dadurch gekennzeichnet**, daß die Lagen (11) durch eine Klammereinrichtung (16, 17) zusammengepreßt sind und als Einheit in den Auslaßbereich des Zylinders (2) und/oder den Eingangsbereich des Abgaskrümmers (5) eingeschoben werden.

6. Anordnung nach einem der Ansprüche 1 bis 5,
**dadurch gekennzeichnet**, daß die einzelnen Lagen (11) durch eine Widerstandsverschweißung miteinander verbunden sind und als Einheit in den Auslaßbereich des Zylinders (2) und/oder den Eingangsbereich des Abgaskrümmers (5) eingeschoben sind.

7. Anordnung nach einem der Ansprüche 1 bis 6,
**dadurch gekennzeichnet**, daß die einzelnen Lagen (11) paketiert einem Sintervorgang unterworfen werden und anschließend als Einheit in den Auslaßbereich des Zylinders (2) und/oder den Eingangsbereich des Abgaskrümmers (5) eingeschoben werden.

8. Anordnung nach einem der Ansprüche 1 bis 7,
**dadurch gekennzeichnet**, daß die Lagen (11) mit Spänen, kleinen Drahtstücken, Fasern (15) oder dergleichen dotiert sind, die mit den Fasern, Spänen oder Drähten (12,13) des Gewebes, Gestrickes oder Gewirres verbunden sind.

9. Anordnung nach Anspruch 8,
**dadurch gekennzeichnet**, daß spratziges Pulver (15), das katalytische Eigenschaften besitzt, vorgesehen ist.

10. Anordnung nach Anspruch 8 oder 9,
**dadurch gekennzeichnet**, daß die Verbindung der Späne, kurzer Drahtstücke, Fasern oder des Pulvers (15) mit den Fasern, Spänen oder Drähten (12,13) des Gewebes, des Gestrickes oder Gewirres durch Widerstandsverschweißung oder Versinterung erfolgt.

11. Anordnung nach einem der Ansprüche 1 bis 10,
**dadurch gekennzeichnet**, daß der Katalysatorkörper (6,7) in einem Tauchbad mit die Oberfläche des Katalysatorkörpers (6,7) vergrößernden Teilchen versehen wird.

12. Anordnung nach einem der Ansprüche 1 bis 11,
**dadurch gekennzeichnet**, daß das Material für den Katalysatorkörper Werkstoffe einer intermetallischen Phase wie Ni₃Al, NiAl, Ti₃Al, TiAl, Mg₂Si, Al₃Mg, MnZr₂, Ti₅Si₃ aufweist.

13. Anordnung nach einem der Ansprüche 1 bis 11,
**dadurch gekennzeichnet**, daß das Material für den Katalysatorkörper Stähle mit 17-26 % Cr, Ni 3-37 %, Si 0,7-2,5 %; C < 0,1 %; Mn 1-2 %, P ≤ 0,03 %; S ≤ 0,02 %, Al 0,7-6 % Gehalt aufweist.

14. Anordnung nach einem der Ansprüche 1 bis 11,
**dadurch gekennzeichnet** , daß das Material für den Katalysatorkörper Stähle mit 18,5 % Cr, 9,5 % Ni, N 0,15 %, Si 1,3 %, C < 0,06 %, und geringe Mengen von seltenen Erdmetallen, vorwiegend Cerium aufweist.

15. Anordnung nach einem der Ansprüche 1 bis 11,
**dadurch gekennzeichnet** , daß das Material für den Katalysatorkörper Stähle mit 21 % Cr, 11 % Ni, 1,7 % Si, C < 0,1 %, N 0,17 % und seltene Erdmetalle, vorwiegend Cerium aufweist.

16. Anordnung nach einem der Ansprüche 1 bis 11,
**dadurch gekennzeichnet** , daß das Material für den Katalysatorkörper Stähle mit 25 % Cr; 35 % Ni, 1,5 % Si, C < 0,05 % und seltene Erdmetalle, vorwiegend Cerium aufweist.

17. Anordnung nach einem der Ansprüche 1 bis 16,
**dadurch gekennzeichnet** , daß als Dotierungspartikeln Metalle, Metalloxyde, Keramik, Kunststoffe oder eine Mischung daraus vorgesehen sind.

18. Anordnung nach Anspruch 17,
**dadurch gekennzeichnet** , daß katalytisch wirkende Partikeln, wie Cr, Va, Mo, Mn, Pt, Rh, Pd, Ti, Si jeweils einzeln oder in Mischung vorgesehen sind.

19. Anordnung nach Anspruch 17,
**dadurch gekennzeichnet** , daß Al₂O₃, SiTiO₃, AlTiO₅, SiO₂, ZrO₂, SiC, TiO₂, BaTiO₃, Si₃N₄, Cr₂O₃ jeweils einzeln oder in Mischung vorgesehen sind.

20. Anordnung nach einem der Ansprüche 1 bis 19,
**dadurch gekennzeichnet**, daß als Dotierungspartikeln Kohlenstoffasern und/oder Kohlenstoffpartikeln alleine oder in Mischung zugegeben sind.

21. Anordnung nach einem der Ansprüche 1 bis 19,
**dadurch gekennzeichnet**, daß als Dotierungspartikeln keramische Fasern, insbesondere Aluminiumoxidfasern, alleine oder in Mischung zugegeben sind.

## Claims

1. Catalytic converter for the exhaust gases of an internal combustion engine arranged in the outlet region of the cylinder (2) of the internal combustion engine in front of the exhaust gas manifold and/or in the inlet region of the exhaust gas manifold (5), the catalytic converter being formed of a woven fabric, knitted fabric or tangled fabric of metal fibres, metal chips, metal wires, metal powder or a mixture thereof, pressed together in one or more layers (11) to form a pack, characterised in that each layer (11) has a lattice structure.

2. Arrangement according to claim 1, characterised in that the lattice meshes (14) of layers (11) arranged one behind the other are offset relative to one another.

3. Arrangement according to claim 1 or claim 2, characterised in that the mesh width is 0.5 to 5 mm, preferably 1 to 2 mm.

4. Arrangement according to one of claims 1 to 3, characterised in that the wires or fibres (12, 13) of a layer (11) have at least approximately a wave shape.

5. Arrangement according to one of claims 1 to 4, characterised in that the layers (11) are pressed together by a clamping means (16, 17) and are inserted as one unit into the outlet region of the cylinder (2) and/or the inlet region of the exhaust gas manifold (5).

6. Arrangement according to one of claims 1 to 5, characterised in that the individual layers (11) are connected together by resistance welding and are inserted as one unit into the outlet region of the cylinder (2) and/or the inlet region of the exhaust gas manifold (5).

7. Arrangement according to one of claims 1 to 6, characterised in that the individual layers (11) are subjected in packs to a sintering process and then are inserted as one unit into the outlet region of the cylinder (2) and/or the inlet region of the exhaust gas manifold (5).

8. Arrangement according to one of claims 1 to 7, characterised in that the layers (11) are doped with chips, small wire pieces, fibres (15) or the like, which are connected to the fibres, chips or wires (12, 13) of the woven fabric, knitted fabric or tangled fabric.

9. Arrangement according to claim 8, characterised in that spattered powder (15) having catalytic properties is provided.

10. Arrangement according to claim 8 or claim 9, characterised in that the chips, short wire pieces, fibres or powder (15) are connected to the fibres, chips or wires (12, 13) of the woven fabric, knitted fabric or tangled fabric by resistance welding or sintering.

11. Arrangement according to one of claims 1 to 10, characterised in that the catalyst body (6, 7) is provided in an immersion bath with particles increasing the surface of the catalyst body (6, 7).

12. Arrangement according to one of claims 1 to 11, characterised in that the material for the catalyst body comprises materials of an intermetallic phase, such as Ni₃Al, NiAl, Ti₃Al, TiAl, Mg₂Si, Al₃Mg, MnZr₂ or Ti₅Si₃.

13. Arrangement according to one of claims 1 to 11, characterised in that the material for the catalyst body comprises steels containing 17-26 % Cr, 3-37 % Ni, 0.7-2.5 % Si, < 0.1 % C, 1-2 % Mn, ≤ 0.03 % P, ≤ 0.02 % S and 0.7-6 % Al.

14. Arrangement according to one of claims 1 to 11, characterised in that the material for the catalyst body comprises steels containing 18.5 % Cr, 9.5 % Ni, 0.15 % N, 1.3 % Si, < 0.06 % C and small quantities of rare-earth elements, mainly cerium.

15. Arrangement according to one of claims 1 to 11, characterised in that the material for the catalyst body comprises steels containing 21 % Cr, 11 % Ni, 1.7 % Si, < 0.1 % C, 0.17 % N and rare-earth elements, mainly cerium.

16. Arrangement according to one of claims 1 to 11, characterised in that the material for the catalyst body comprises steels containing 25 % Cr, 35 % Ni, 1.5 % Si, < 0.05 % C and rare-earth elements, mainly cerium.

17. Arrangement according to one of claims 1 to 16, characterised in that metals, metal oxides, ceramics, plastics or a mixture thereof are provided as the doping particles.

18. Arrangement according to claim 17, characterised in that catalytically active particles, such as Cr, Va, Mo, Mn, Pt, Rh, Pd, Ti and Si are provided individually or in a mixture.

19. Arrangement according to claim 17, characterised in that AL₂O₃, SiTiO₃, AlTiO₅, SiO₂, ZrO₂, SiC, TiO₂, BaTiO₃, Si₃N₄ and Cr₂O₃ are provided individually or in a mixture.

20. Arrangement according to one of claims 1 to 19, characterised in that carbon fibres and/or carbon particles are added alone or in a mixture as the doping particles.

21. Arrangement according to one of claims 1 to 19, characterised in that ceramic fibres, in particular aluminium oxide fibres, are added alone or in a mixture as the doping particles.

## Revendications

1. Catalyseur pour les gaz d'un moteur à combustion interne, disposé dans la zone d'échappement du cylindre (2) du moteur à combustion interne avant le collecteur d'échappement et/ou dans la zone d'entrée du collecteur d'échappement (5), ce catalyseur étant constitué d'un tissu, d'un tricot ou d'un tissu à mailles fait de fibres métalliques, de copeaux métalliques, de fils métalliques, de poudre métallique ou d'un mélange de ces éléments, qui sont comprimés en un paquet d'une ou plusieurs couches (11), **caractérisé en ce** **que** chaque couche (11) présente une structure grillagée.

2. Dispositif selon la revendication 1, **caractérisé en ce que** les mailles du grillage (14) sont disposées de façon décalée et constituées par des couches (11) superposées.

3. Dispositif selon la revendication 1 ou 2, **caractérisé en ce que** les mailles ont des ouvertures comprises entre 0,5 et 5 mm et de préférence de 1 à 2 mm.

4. Dispositif selon l'une des revendications 1 à 3, **caractérisé en ce que** les fils ou les fibres (12, 13) d'une couche (11) présentent au moins approximativement la forme de vague.

5. Dispositif selon l'une des revendications 1 à 4, **caractérisé en ce que** les couches (11) sont comprimées par un dispositif de pincement (16, 17) et sont insérées globalement dans la zone d'échappement du cylindre (2) et/ou la zone d'entrée du collecteur d'échappement (5).

6. Dispositif selon l'une des revendications 1 à 5, **caractérisé en ce que** les couches individuelles (11) sont couplées entre elles par une soudure de renforcement et sont insérées globalement sous la forme d'une pièce unitaire dans la zone d'échappement du cylindre (2) et/ou dans la zone d'entrée du collecteur d'échappement (5).

7. Dispositif selon l'une des revendications 1 à 6, **caractérisé en ce que** les couches individuelles (11) sont mises en paquet au cours d'un processus de frittage et sont insérées globalement sous la forme d'une pièce unitaire dans la zone d'échappement du cylindre (2) et/ou dans la zone d'entrée du collecteur d'échappement (5).

8. Dispositif selon l'une des revendications 1 à 7, **caractérisé en ce que** les couches (11) comportent des copeaux, des petits morceaux de fils, des fibres (15) ou similaires, qui sont reliés entre eux par des fibres, des copeaux ou des fils (12, 13) du tissu, tricot ou tissu à mailles.

9. Dispositif selon la revendication 8, **caractérisé en ce qu'**il comporte de la poudre en fragments irréguliers (15) qui présente des caractéristiques catalytiques.

10. Dispositif selon la revendication 8 ou 9, **caractérisé en ce que** la liaison des copeaux, des petits morceaux de fils, des fibres ou de la poudre (15) par les fibres, les copeaux ou les fils (12, 13) du tissu, du tricot ou du tissu à mailles s'obtient par des soudures de renforcement ou par frittage.

11. Dispositif selon l'une des revendications 1 à 10, **caractérisé en ce que** le corps du catalyseur (6, 7) est pourvu de particules agrandissant la surface du corps de catalyseur (6, 7) par immersion dans un bain.

12. Dispositif selon l'une des revendications 1 à 11, **caractérisé en ce que** le matériau utilisé pour constituer le corps du catalyseur présente une phase d'alliage métallique telle que Ni₃Al, NiAl, Ti₃Al, TiAl, Mg₂si, Al₃Mg, MnZr₂, Ti₅Si₃.

13. Dispositif selon l'une des revendications 1 à 11 **caractérisé en ce que** le matériau du corps du catalyseur comporte des aciers ayant 17 à 26% de Cr; 3 à 37% de Ni; 0,7 à 2,5% de Si; < 0,1% de C; 1 à 2% de Mn; ≤ 0,03% de P; ≤ 0,02% de S; 0,7 à 6% d'Al.

14. Dispositif selon l'une des revendications 1 à 11 **caractérisé en ce que** le matériau du corps du catalyseur comporte des aciers ayant 18,5% de Cr; 9,5% de Ni; 0,15% de N; 1,3% de Si; < 0,06% de C et de faibles quantités de métaux rares, de préférence du cérium.

15. Dispositif selon l'une des revendications 1 à 11 **caractérisé en ce que** le matériau du corps du catalyseur comporte des aciers ayant 21% de Cr; 11% de Ni, 1,7% de Si; < 0,1% de C; 0,17% de N et des métaux rares, de préférence du cérium.

16. Dispositif selon l'une des revendications 1 à 11 **caractérisé en ce que** le matériau du corps du catalyseur comporte des aciers ayant 25% de Cr; 35% de Ni; 1,5% de Si; < 0,05% de C et des métaux rares, de préférence du cérium.

17. Dispositif selon l'une des revendications 1 à 16 **caractérisé en ce** qu'il comporte des particules de dopage faites de métal, d'oxydes métalliques, de céramiques, de matières synthétiques ou d'un mélange de ces particules.

18. Dispositif selon la revendication 17, **caractérisé en ce que** les particules catalytiques comportent Cr, Va, Mo, Mn, Pt, Rh, Pd, Ti, Si individuellement ou en mélange.

19. Dispositif selon la revendication 17, **caractérisé en ce** qu'il comporte Al₂O₃, SiTiO₃, AlTiO₅, SiO₂, ZrO₂, SiC, TiO₂, BaTiO₃, Si₃N₄, Cr₂O₃ individuellement ou en mélange.

20. Dispositif selon l'une des revendications 1 à 19, **caractérisé en ce que** les particules de dopage comportent des fibres de carbone et/ou des particules de carbone individuelles ou en mélange.

21. Dispositif selon l'une des revendications 1 à 19, **caractérisé en ce que** les particules de dopage comportent des fibres de céramique, en particulier des fibres d'oxyde d'aluminium individuelles ou en mélange.
